Europäisches Patentamt

European Patent Office

Office européen des brevets

(19)

(11) Publication number: **0 027 707**
**B1**

(12) **EUROPEAN PATENT SPECIFICATION**

(45) Date of publication of patent specification: **02.03.83**

(21) Application number: **80303573.2**

(22) Date of filing: **10.10.80**

(51) Int. Cl.³: **B 23 K 26/08,**
B 23 K 26/06, B 23 K 26/02

(54) Method for preparing thin metal sheet for welding.

(30) Priority: **20.10.79 GB 7936493**

(43) Date of publication of application:
**29.04.81 Bulletin 81/17**

(45) Publication of the grant of the patent:
**02.03.83 Bulletin 83/9**

(84) Designated Contracting States:
**BE DE FR GB LU NL**

(56) References cited:
**FR - A - 2 443 296**
**GB - A - 1 316 412**
**US - A - 4 020 319**
**US - A - 4 081 654**

(73) Proprietor: **METAL BOX p.l.c.**
**Queens House Forbury Road**
**Reading RG1 3JH Berkshire (GB)**

(72) Inventor: **Richard, Malcolm James**
**35 Fixdell Way Chalfont St Peter**
**Buckinghamshire SL9 OPL (GB)**

(74) Representative: **Saunders, Harry**
**SAUNDERS & DOLLEYMORE 2 Norfolk Road**
**Rickmansworth Hertfordshire WD3 1JH (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England

## Method for preparing thin metal sheet for welding

This invention relates to methods and apparatus for preparing thin metal sheet, having a coating of organic material, for welding along an edge of the sheet.

The invention is particularly directed to (but not confined to) the preparation of sheets of steel of very thin gauge for welding of two opposing edges to each other, so as to form a cylinder which, when a suitable end member is applied to the cylinder, forms part of the body of an openended container, usually in the form of a can.

In a process of making metal containers, it is customary to apply organic coatings to the sheet whilst the latter is flat, and before it is cut into the separate pieces each of which will become a container body cylinder. These organic coatings typically comprise a protective coating of a suitable lacquer on one side, to be eventually in contact with a product within the container, and a coating on the other side which may be in the form of organic printing ink to form a decorative surface. There may alternatively, or in addition, be an organic protective lacquer on this latter, or external, side of the sheet.

The coated sheets are cut up and each of the resulting smaller sheets is bent into a cylinder with two opposing edges abutting each other. Whilst the sheet is so bent, the abutting edges are welded to each other, usually by a resistance welding process of a kind well known in the art. Subsequently a layer of protective lacquer may, if required, be applied over the resulting welded seam, either on the inside of the cylinder or on the outside thereof, or both, so as to complete any protective coating of the cylinder as necessary.

It is however necessary for narrow margins (typically one millimetre in width), bounded on one side by an edge of the edges to be welded, to be left clean, i.e. without any of the organic coating material on it. This is because the organic coating would otherwise interfere with the welding current. On each sheet there are four such margins. To this end it is usual, when originally applying protective or decorative organic coatings to the metal sheet, to leave narrow strips of uncoated metal along the sites of what will become the edge margins of the individual sheets to be welded. However, even when great care is exercised, it is difficult to prevent some of the coating material finding its way on to those very narrow strips, either by splashing or by other accidental means. When this happens, the welded seam at that point will be weakened, and the result is therefore a faulty or potentially faulty container.

Another disadvantage of this method, whereby a narrow strip of uncoated metal is left, lies in various restrictions imposed on the coating process itself by the necessity to leave such strips with their resulting free edges of coating material. In general, if overall coating were possible, the quality of the resulting coating, and the performance of the coating process, would be substantially improved.

The metal of which the sheet is composed may be any metal or alloy capable of being welded. In this Description, without prejudice to the admitted applicability of the invention to other metals or alloys, emphasis is laid on steel, as being the commonest weldable metal. In the manufacture of steel containers such as cans, the steel may have thin coating of metallic tin. Alternatively, it is becoming increasingly common to use so-called "tin-free steel", which consists of a steel substrate having a thin coating of metallic chromium and chromium oxide. Where tin-free steel sheet is to be welded, it is necessary to clean off this chromium/chromium oxide coating in the edge margins prior to welding. For this purpose a mechanical process is usually used, involving scraping or cutting the coating from the substrate. If an organic coating is also present, this is found to clog the cutting tools, so that it is essential for no organic material to be present in the edge margins of tin-free steel sheets which are to be welded.

The metal to be welded must naturally be sound, and should not be metallurgically different, i.e. different to any substantial degree in its grain-structure hardness, thickness or other physical characteristics, from the remainder of the sheet. It is therefore necessary that nothing should be done to affect the substrate steel (or other substrate metal).

It will be evident from the foregoing that a process for removing organic coating material from the edge margins of the metal sheet is desirable. Such a method would enable an overall coating to be applied to the sheet material prior to the latter being cut into individual sheets, the margins then being cleaned of organic coating material prior to being welded. It would also, where the metal is tin-free steel, enable the margins to be clean of organic coating material before the chromium/chromium oxide coating is removed, without any danger of clogging of the tools used for this latter operation. Finally, even where strips of uncoated metal are still left in the coating process, an effective edge cleaning method would enable any stray coating material in the edge margins, resulting from splashing, or from other unwanted causes, to be removed, so ensuring that this source of potentially faulty containers is eliminated.

Reference is made to the prior art specification US—A—4020319 and US—A—4081654 which disclose the use of a laser beam in treating workpieces.

The invention provides a method of preparing thin metal sheet having a coating of organic material, for welding along an edge of the sheet, in which a laser beam is directed convergently by a focussing device on to a narrow margin of the sheet bounded on one side by the edge to be welded, and relative movement is effected between the sheet and the beam whilst maintaining the intensity of the beam substantially constant at the margin. The laser beam sweeps the whole of the margin. The intensity of the focussed beam and the linear velocity of the relative movement, are together such that no substantial heating of the metal takes place; it is however heated to a small degree, i.e. to a temperature high enough to volatilize the organic coating on the margin but low enough to avoid any damage or metallurgical change taking place in the metal itself. The metallurgical integrity of the metal is thus ensured.

The laser beam can be concentrated only on the margin itself and affect no other part of the sheet. Extremely accurate control, both of the intensity of the beam and of the manner in which it is directed on to the margin, is possible. A suitable and convenient range of values of the intensity of the focussed beam at the margin of the metal sheet is 0.5 to 2 $Kw/mm^2$. The method for achieving control of the direction and intensity of the laser beam will be evident to those knowledgeable in the art of laser technology, and suitable control systems may readily be devised using commercially-available units. For this reason it is not proposed to describe such control systems, or their operation, in detail in this present Application.

The effect of the laser beam impinging on the organic coating on the edge margin of the sheet is that it will volatilize or burn off the coating on the margin. The invention thus enables the organic coating to be applied over the whole sheet, and at the same time ensures that all traces of coating material can be removed from the edge margins whether or not such an overall organic coating has been applied.

Various ways of ensuring that the laser beam will impinge on the whole of the edge margin may be employed. In one such method, the sheet is offset, in a direction normal to the sheet, from the focal plane so that the beam is impinging on the whole width of the margin at any instant. Preferably, for the performance of the method in this way, the focussing device comprises a converging lens, having a focal length slightly different from the normal distance between the converging lens and the sheet, and a cylindrical lens arranged to flatten the laser beam focussed by the converging lens, so that the beam impinges on the margin in the form of a line normal to the sheet edge and having a length equal to the width of the margin.

In an alternative method for ensuring that the laser beam will impinge on the whole of the edge margin, the sheet is arranged substantially in the focal plane, the focussing device being rapidly moved so as to move the focussed beam from side to side during said relative movement whereby to sweep the margin in a zig-zag pattern. The apparatus for this method preferably comprises a converging lens associated with a scanning means arranged to move the focussed beam rapidly from side to side whereby to sweep the margin in a zig-zag pattern, the lens being so positioned that when the sheet is mounted in the mounting means its said margin lies substantially in the focal plane of the lens.

Since every sheet has four margins, then if the sheet is coated on both sides all four margins will require to be cleaned. If it is coated on only one side, two margins will need cleaning. It is desirable, when cleaning one edge margin, to clean the other margin on that side of the sheet; and if four margins are to be cleaned it is desirable to deal with all four simultaneously. Preferably, therefore, a plurality of said margins of the sheet are swept simultaneously by respective laser beams each of substantially the same intensity as each other. To this end, the apparatus preferably includes a plurality of said focussing devices, each adapted to direct a separate beam on to a separate one of a plurality of said margins of the sheet.

For simultaneous cleaning of more than one edge margin, a separate laser may be used for each margin. Alternatively, however, the method may be such that at least two of said laser beams are derived from a single laser through an optical beam-splitting device; and to this end the apparatus is arranged accordingly.

The apparatus is preferably arranged so that it includes a support conveyor, arranged to hold the sheet in a predetermined transverse register and to move the sheet along a path such that the whole length of said margin traverses the beam, the laser and focussing device being mounted in fixed positions relative to said path.

Embodiments of the invention will now be described, by way of example only, with reference to the drawings hereof, in which:—

Figure 1 shows a thin sheet of metal to be formed into a body cylinder for a container;

Figure 2 shows the same sheet formed into such a cylinder with a welded side seam;

Figure 3 is a partly-diagrammatic illustration, seen in section on the line III—III in Figure 4, of part of an apparatus, in a first embodiment according to the invention, for cleaning edge margins of the sheet in preparation for welding the latter along its opposed edges;

Figure 4 is a rear view of a conveyor forming part of the apparatus shown in Figure 3, and shows several successive sheets in position on the conveyor for edge margin cleaning purposes.

Figure 5 is a diagrammatic illustration of a second embodiment of the invention; and

Figure 6 is a diagrammatic illustration of a modified form of apparatus applicable to both of the said first and second embodiments of the invention.

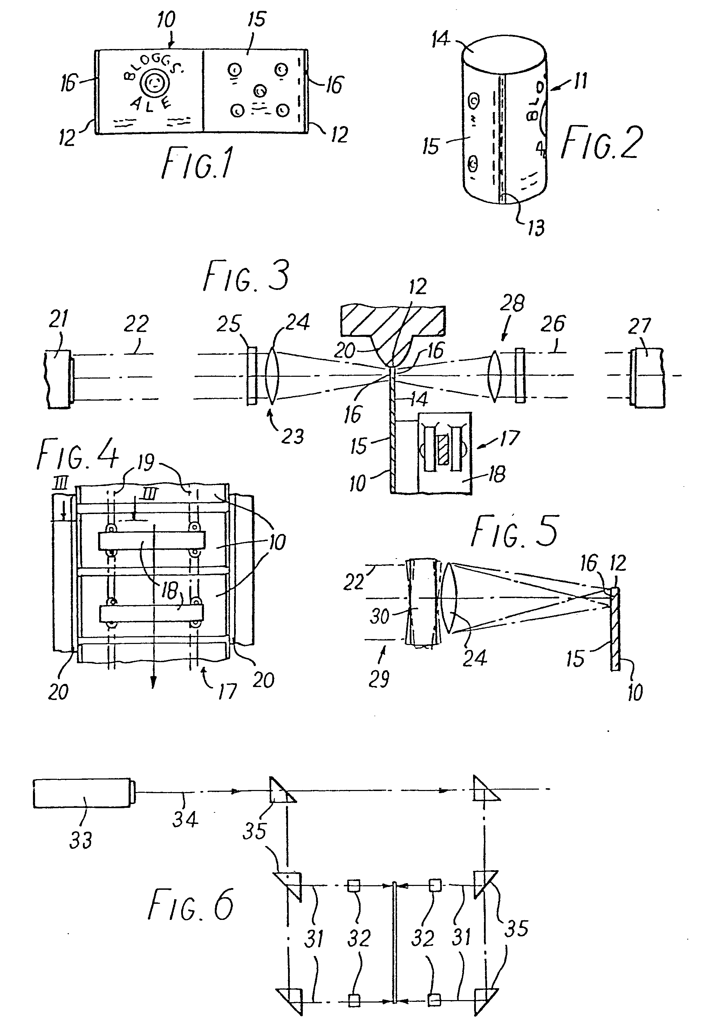

The sheet of metal 10 shown in Figure 1 is of thin tinplate. It is formed into a can body cylinder 11, Figure 2, in a bodymaker (not shown) in which the sheet is held in the form of a cylinder whilst its free side edges 12, Figure 1, are welded together by a known resistance welding apparatus to form a longitudinal side seam 13. Subsequently the two end edges of the can body cylinder 11 are formed with flanges, to one of which an end closure member is secured in known manner, the other end being similarly closed by another closure member after the can has been filled with a product. The nature of this product (e.g. food) is such that the latter must be protected from contact with the metal or the can. The inside face 14 of the sheet 10 is therefore covered with a coating (not visible in the drawings) of a suitable organic protective lacquer. Similarly, the outside face 15 of the sheet has an overall coating (again, not visible in the drawings) of a decorative nature, indicating the contents, the trade mark of the food manufacturer, etc.

The abovementioned coatings are applied to a large sheet of tinplate, from which a number of identical sheets are cut, the sheet 10 being one of them. Each coating is applied over the whole of the large sheet, and before the welding operation to form the side seam 13, the two edge margins 16, each in the form of a strip one millimetre wide bounded by the adjacent side edge of the sheet, there being two margins 16 on each of the sides 14 and 15 of the sheet 10, must be cleaned of the organic cleaning thereon. This cleaning operation consists in removal of the coating, from only the edge margin 16, in the manner now to be described, whilst the sheet 10 is still in its flat state.

Referring to Figures 3 and 4, an apparatus for cleaning the edge margins 16 includes a conveyor 17 which may be in any convenient form, but which in this example comprises a plurality of equally spaced magnetic dogs 18, each of which holds a separate one of a succession of the sheets 10. The dogs 18 are connected by chains 19, and the conveyor is driven at constant linear velocity, by means not shown, in the direction indicated by the arrow in Figure 4. The side edges of each sheet are maintained in register, transversely of the path of the sheet, by fixed edge guides 20. Figure 3 shows only one of these edge guides and a small portion of the sheet 10 and conveyor 17.

A fixed laser 21 directs a beam 22 on to one of the edge margins 16, through a focussing device 23 which directs the beam 22 convergently on the edge margin. The beam 22 is normal to the plane of the latter, so that as the sheet 10 is moved by the conveyor 17 at constant speed, the intensity of the focussed beam 22 at the margin 16 is maintained at a substantially constant value in the inclusive range 0.5 to 2.0 kilowatts per square millimetre. This value is predetermined, and is such as to be sufficient only to remove the organic coating on the margin 16, but not sufficient to effect any substantial heating of the metal of the sheet 10. The value of the speed at which the sheet is moved past and the focussed laser beam is chosen to ensure this. Such heating of the metal of the margin 16 as does take place under these conditions ensures that the organic coating on the margin is fully volatilized, but does not involve an increase to a temperature such as to cause any metallurgical change to, or removal of, any of the metal.

In the arrangement shown in Figure 3, the focussing device comprises two fixed lenses, viz. a converging lens 24 which focusses the beam 22 towards the sheet 10, and a cylindrical lens 25. The plane of the sheet 10 is offset, in the direction of the beam 22, i.e. in a direction normal to the sheet, from the focal plane, by an amount such that, if the cylindrical lens 25 were not present, the beam would impinge as a circular spot one millimetre in diameter, on the edge margin 16 of the sheet. The cylindrical lens serves to flatten the convergent beam so that it impinges along a line, one millimetre long, spanning the width of the edge margin 16. Thus as the sheet 10 is moved by the conveyor, this line of light sweeps along the whole length of the edge margin, so burning off or volatilizing the organic coating therefrom.

The edge margin 16 on the other side of the sheet 10 is similarly subjected to an identically-directed laser beam 26, of the same intensity as the beam 22 and derived from a second laser 27 via another focussing device 28, identical with the device 23. The edge margins at the other side edge (not shown) of the sheet 10 are simultaneously treated in the same way by the beams from two further lasers, so that in this embodiment the apparatus has four identical lasers and four identical focussing devices.

Figure 5 shows a focussing device 29 which may be substituted for the focussing devices 23 or 28, in a modification of the apparatus shown in Figure 3. In the device 29, the converging lens 24 is associated with a scanner 30, which is arranged to move the focussed laser beam 22 rapidly from side to side as the sheet 10 is moved by the conveyor 17. The beam 22 in this case is focussed on the edge margin 16, the latter being substantially in the focal plane of the lens 24. Thus the beam makes a small spot of light on the edge margin, and this spot sweeps the whole of the margin 16 in what is effectively a zig-zag pattern.

Referring now to Figure 6, in the system shown therein, the four edge margins of the sheet 10 are treated simultaneously by four laser beams 31 of equal intensity to each other via four, respective, focussing devices 32. The devices 32 may each for example be similar to the focussing device 23 or 28 (Figure 3) or to the device 29 shown in Figure 5. However, in Figure 6 there is a single laser 33, whose primary beam 34 is split by suitable optical beam-splitting devices 35, the resulting components of the split beam being the four equal beams 31. The devices 35 are shown diagrammatically in Figure 6 in the form of prisms, but they may take any suitable known form.

## Claims

1. A method of preparing thin metal sheet (10) having a coating of organic material, for welding along an edge (12) of the sheet, characterised in that a laser beam (22) is directed convergently by a focussing device (23) on to a narrow margin (16) of the sheet bounded on one side by the edge to be welded, and relative movement is effected between the sheet (10) and the beam (22) whilst maintaining the intensity of the beam substantially constant at said margin, so that the laser beam sweeps the whole of the margin, the intensity of the focussed beam and the linear velocity of said relative movement being together such that the metal surface of said margin (16) is heated to a temperature sufficiently high to volatilize the organic coating thereon but sufficiently low to avoid any metallurgical change in, or removal of, any of said metal surface.

2. A method according to Claim 1, characterised in that the intensity of the focussed beam (22) is in the inclusive range 0.5 to 2 Kw/mm².

3. A method according to Claim 1 or Claim 2, characterised in that the sheet (10) is offset, in a direction normal to the sheet, from the focal plane so that the beam (22) is impinging on the whole width of the margin (16) at any instant.

4. A method according to Claim 1 or Claim 2, characterised in that the sheet (10) is arranged substantially in the focal plane, the focussing device (29) being rapidly moved so at to move the focussed beam (22) from side to side during said relative movement whereby to sweep the margin (16) in a zig-zag pattern.

5. A method according to any one of the preceding claims, characterised in that a plurality of said margins (16) of the sheet (10) are swept simultaneously by respective laser beams (22, 26) each of substantially the same intensity as each other.

6. A method according to Claim 5, characterised in that at least two of said laser beams (31) are derived from a single laser (33) through an optical beam-splitting device (35).

## Revendications

1. Procédé pour préparer de la tôle mince (10) comportant un revêtement en matière organique, en vue d'un soudage le long d'un bord (12) de cette tôle, caractérisé en ce qu'on dirige un faisceau laser (22) de manière convergente au moyen d'un dispositif focalisateur (23) sur une bordure étroite (16) de la tôle bordée d'un côté par le bord à souder, et on effectue un déplacement relatif entre la tôle (10) et le faisceau (22) tout en maintenant l'intensité du faisceau en substance constante au niveau de la bordure, de sorte que le faisceau laser balaie la totalité de la bordure, l'intensité du faisceau focalisé et la vitesse linéaire du déplacement relatif étant ensemble telles que la surface métallique de la bordure (16) est chauffée à une température suffisamment élevée pour volatiliser le revêtement organique présent sur cette bordure, mais suffisamment basse pour éviter toute modification métallurgique dans la surface du métal ou tout enlèvement de métal de cette surface.

2. Procédé suivant la revendication 1, caractérisé en ce que l'intensité du faisceau focalisé (22) se situe dans l'intervalle de 0,5 à 2 kW/mm².

3. Procédé suivant la revendication 1 ou 2, caractérisé en ce que la tôle (10) est décalée, dans un sens perpendiculaire, du plan focal, de sorte que le faisceau (22) frappe à tout moment toute la largeur de la bordure (16).

4. Procédé suivant la revendication 1 ou 2, caractérisé en ce que la tôle (10) est disposée en substance dans le plan focal, le dispositif focalisateur (29) étant déplacé rapidement de manière à déplacer le faisceau focalisé (22) d'un côté à l'autre pendant le déplacement relatif afin de balayer la bordure (16) en zigzag.

5. Procédé suivant l'une quelconque des revendications précédentes, caractérisé en ce que plusieurs bordures (16) de la tôle (10) sont balayées simultanément par des faisceaux laser (22, 26) correspondants qui ont chacun en substance la même intensité que les autres.

6. Procédé suivant la revendication 5, caractérisé en ce qu'au moins deux faisceaux laser (31) sont obtenus à partir d'un seul laser (33) par l'intermédiaire d'un diviseur optique (35).

## Patentansprüche

1. Verfahren zum Vorbereiten von mit einer Beschichtung aus organischem Material versehenem dünnem Metallblech (10) für die Durchführung eines Schweissvorganges entlang einer Kante (12) des Bleches, dadurch gekennzeichnet, dass ein Laserstrahl (22) durch eine Fokussiereinrichtung (23) gesammelt auf einen schmalen Streifen (16) des Bleches gerichtet wird, der an einer Seite durch die zu schweissende Kante begrenzt ist, und eine Relativbewegung zwischen dem Blech (10) und dem Strahl (22) herbeigeführt wird, wobei die Intensität des Strahles im wesentlichen konstant auf dem Streifen gehalten wird, so dass der Laserstrahl den gesamten Streifen überstreicht, und die Intensität des fokussierten Strahles und die lineare Geschwindigkeit der relativen Bewegung derart aufeinander abgestimmt sind, dass die Metalloberfläche des Streifens (16) auf eine Temperatur erwärmt wird, die ausreichend hoch ist, um die organische Beschichtung zu verdampfen, aber ausreichend niedrig ist, um jede metallurgische Änderung in oder ein Abtragen von der Metalloberfläche zu vermeiden.

2. Verfahren nach Anspruch 1, dadurch gekennzeichnet, dass die Intensität des fokussierten Strahles (22) im Bereich von 0,5 — 2 kw/mm² liegt.

3. Verfahren nach Anspruch 1 oder 2, dadurch gekennzeichnet, dass das Blech (10) senkrecht zu seiner Ebene von der Fokalebene derart versetzt ist, dass der Strahl (22) jederzeit über die gesamte Breite des Streifens (16) auf diesem auftrifft.

4. Verfahren nach Anspruch 1 oder 2, dadurch gekennzeichnet, dass das Blech (10) im wesentlichen in der Vokalebene angeordnet ist und die Fokussiereinrichtung (29) derart schnell bewegt wird, dass der fokussierte Strahl (22) während der Relativbewegung von Seite zu Seite bewegt wird und dadurch den Streifen (16) zick-zack-artig überstreicht.

5. Verfahren nach einem der vorhergehenden Ansprüche, dadurch gekennzeichnet, dass mehrere Streifen (16) des Bleches (10) gleichzeitig durch entsprechende Laserstrahlen (22, 26) von im wesentlichen gleicher Intensität überstrichen werden.

6. Verfahren nach Anspruch 5, dadurch gekennzeichnet, dass wenigstens zwei der Laserstrahlen (31) von einem einzigen Laser (33) durch eine optische Strahlenteilungseinrichtung (35) abgeleitet werden.

FIG.1

FIG.2

FIG. 3

FIG. 4

FIG. 5

FIG. 6